# EUROPEAN PATENT APPLICATION

(11) **EP 4 354 989 A1**
(43) Date of publication of application: **17.04.2024**
(21) Application number: 22306542.6
(22) Date of filing: 12.10.2022
(51) Int. Cl.: H04W 72/04

(54) **PREVENTIVE RADIO RESOURCES SELECTION**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CIOCHINA, Cristina, 35708 RENNES CEDEX 7 (FR); SIBEL, Jean-Christophe, 35708 RENNES CEDEX 7 (FR); GRESSET, Nicolas, 35708 RENNES CEDEX 7 (FR)
(74) Representative: Plasseraud IP

(57) **Abstract**

The invention relates to a method, comprising: obtaining a first set of radio resources available to send a forward packet from a first user equipment; obtaining a second set of radio resources available to perform an operation related to the forward packet; selecting, among said first set of radio resources, a first radio resource having a first time so that at least one second radio resource from the second set is comprised in a time window having a lower bound after said first time and an upper bound defined according to at least one of said forward packet; sending, by the first user equipment, said forward packet using said first radio resource.

## Description

### Technical Field

This disclosure pertains to the field of wireless communication systems.

More specifically, it pertains to the field of radio resources selection.

### Background Art

Wireless communication systems allow devices to communicate wirelessly. In order to allow devices from a large number of different manufacturers to interact seamlessly, wireless communication usually comply with radio communication standards such as for example the standard established by the IEEE (for example IEEE 802.11 for WI-FI communication), or 3GPP (for example the 3G, 4G, or 5G standards for cellular network communications).

Most radio communication standards rely upon the selection of radio resources for wireless communication. Each radio resource can be attributed to a single wireless device, in order to prevent a radio resource to be used by multiple devices, and therefore prevent interferences in wireless communication.

In existing systems, a wireless device requests a radio resource when it needs to send a message. However, this only provides a radio resource for sending a message. In certain situations, some further operations need to be performed after a message is sent. For example:
- the message may need to be sent again if the first transmission failed ;
- the some measurements may need to be performed in a limited time after the message has been sent;
- a response message may need to be received in a bounded time after the first message is sent.

In each of these exemplary situations, the compliance with a time limit depends upon the availability of radio resource in the future, which is not guaranteed by existing scheme of selecting radio resources.

For example, some applications used for closed-loop control, e.g. motion control, are based on a working mode that requires a round-trip exchange of information. The round-trip is characterized by the transmission of a response or backward packet whose transmission time and/or content are fully determined by the arrival time and content of a request or forward packet. The performance of such applications is then dependent on the time for this round-trip, said the Round-Trip Time (RTT).

The RTT is an application metrics that is usually not known at lower layer, e.g. access layers. In 5G NR, only the remaining Packet Delay Budget (PDB) for transmitting a data packet or a transport block is known by the physical layer. PDB is an upper bound on the time for a transmitter to transmit a packet. Due to the radio conditions, some transmission might fail, and some re-transmissions are needed. Then it is hard to know with a very high precision the exact time instant at which one packet is successfully received. Consequently, the experimented round-trip time could be significantly lower than the sum of the PDBs form one couple of forward-backward packets to another. Such a time varying RTT, or jitter, is detrimental to the application performance.

Existing solutions fail to ensure that RTT is met after a first message is sent. More generally, existing solutions fail to ensure that any time constraint depending upon radio communication and linked to the transmission of a first message is complied with.

There is therefore the need for a radio resource selection method, which allows ensuring that time constraints related to operations caused by the send of a first message are met.

### Summary

This disclosure improves the situation.

It is proposed a method comprising: obtaining a first set of radio resources available to send a forward packet from a first user equipment; obtaining a second set of radio resources available to perform an operation related to the forward packet; obtaining, among said first set of radio resources, at least one first radio resource associated to at least one first time so that at least one second radio resource from the second set is comprised in a time window having a lower bound after said at least one first time; sending, by the first user equipment, said forward packet using said at least one first radio resource.

By radio resources available to send a forward packet from a first user equipment, we designate radio resources that are determined as suitable for sending a forward packet by the first user equipment. This determination may be for example performed by determining, for each radio resource, if it is suitable for sending a packet by the first user equipment, or conversely by excluding resources which are determined as not suitable for sending the packet. This may be for example performed by the first user equipment screening its environment, and/or by the procedure defined in the standard TS38.214/8.1.4. The screening of the environment may for example be a sensing procedure.

By "an operation related to the forward packet", we designate an operation whose execution is caused by the forward packet, and which is expected as a result of the transmission of the forward packet and requires the use of radio resources. For example, such operation may be a reception of a backward packet in response to the forward packet, measurements on a radio network after the emission of the forward packet, or the emission of a further forward packet related to the forward packet, for example another packet sent by the same application.

By "radio resources available to perform an operation", we designate radio resources that are determined as suitable to be used by the operation.

By "at least one first radio resource associated to at least one first time", we designate that at least one first time is associated respectively to at least one first radio resource. Each first radio resource is associated to a first time, which corresponds to a time at which the first radio resource can be used.

A single first radio resource, or a plurality of radio resources, can be obtained in the same time. For example, a plurality of first radio resources are obtained in the same time to plan the emission of a plurality of forward packets using the plurality of radio resources. In another example, a plurality of first radio resource are obtained in the same time to plan the successive re-transmissions of a same forward packets using the plurality of radio resources

This ensures that a second radio resource can be selected which complies with time limits related to the forward packet.

In another aspect, it is proposed a method comprising : receiving a forward packet from a first user equipment, by a second user second user equipment in a D2D communication using a first radio resource having a first time ; selecting a second radio resource available to send a backward packet related to said forward packet by the second user equipment comprised in a time window having a lower bound after said first time and an upper bound defined according to at least one of said forward packet and said first time; sending, by the second user equipment, said backward packet to the first user equipment using second radio resource.

In another aspect, it is proposed a forward packet sent by a first user equipment using a first radio resource having a first time, said first radio resource being selected among a first set of radio resources available to send said forward packet from the first user equipment so that at least one second resource from a second set of radio resources available to perform an operation related to the forward packet is comprised in a time window having a lower bound after said first time.

In another aspect, it is proposed a user equipment comprising at least one processor configured to execute the method according to one of the embodiments of the disclosure.

In another aspect, it is proposed a computer software comprising instructions to implement at least a part of a method according to one of the embodiments of the disclosure when the software is executed by a processor.

In another aspect, it is proposed a computer-readable non-transient recording medium on which a software is registered to implement a method according to one of the embodiments of the disclosure when the software is executed by a processor

In another aspect, it is proposed a user equipment comprising at least one processor configured to execute at least a part of a method as defined here when the software is executed by a processor.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

In a number of embodiments of the invention, said first radio resource is selected so that the number of second radio resources from the second set in the time window is at least equal to a threshold of number radio resources.

This ensures that the number of radio resources in the second set available for performing the operation is at least equal to a threshold, in order to obtain a sufficient probability that at least one of the resources of the second set in the time window will be actually available at the time the second resource is requested.

In a number of embodiments of the invention, the first set of radio resources, and the second set of radio resources are obtained in a global time window having a global upper bound.

This allows ensuring that the radio resource will be selected so that the last possible time of selecting a radio resource from the second set complies with an operational constraint.

In a number of embodiments of the invention, said time window has an upper bound defined according to at least one of said forward packet and said first time.

By "an upper bound defined according to at least one of said forward packet and said first time", we designate a time which is dependent upon the forward packet and/or the first time. For example, the forward packet may be related to time thresholds to perform the operation which may apply after the first time, a maximal time to perform the operation, etc.

This allows ensuring that a radio resource will be available for executing the operation in a time frame that complies with time limits defined the forward packet and the first time associated herewith. In particular, if the operation is a reception of a backward packet, this allows ensuring that time constraints of a communication are met.

In a number of embodiments of the invention, said upper bound is defined as a maximal threshold after said first time.

This allows ensuring that a radio resource will be available for executing the operation in a time frame that complies with a limited time after the time the forward packet is sent. In particular, if the operation is a reception of a backward packet, this allows ensuring that time constraints of a communication are met.

In a number of embodiments of the invention, the method comprises, while at least one selection criterion is not complied with, iteratively modifying one or more parameters of one or more of the steps of: obtaining a first set of radio resources ; obtaining the second set of radio resources ; and selecting the first radio resource.

This allows selecting the best first radio resource, by modifying the parameter selection until a suitable radio resource can be selected.

In a number of embodiments of the invention, the method comprises associating to the forward packet at least one data relative to indications for performing the operation related to the forward packet.

We designate by "at least one data relative to indications for performing the operation related to the forward packet" data that is relevant for performing the operation related to the forward packet. This may be for example constraints relative to the operation such as a limit time, or indications of the radio resources that could be selected for sending back a backward packet in response to the forward packet.

This allows the recipient of the forward packet to benefit from all the relevant information for performing the operation related to the forward packet.

In a number of embodiments of the invention, the operation comprises sending (S51), to the first equipment, a backward packet related to said forward packet.

By "a backward packet related to said forward packet", we designate a backward packet whose transmission is caused by the transmission of the forward packet, and is expected as a result of the transmission of the forward packet. For example, the backward packet may contain a response, to the content of the forward packet. The response may be generated by an application which receives the backward packet,

In a number of embodiments of the invention, said second set of radio resources comprises radio resources available to receive a backward packet by the first user equipment.

By "radio resources available to receive a backward packet by the first user equipment", we designate radio resources that are determined as suitable for receiving a backward packet by the first user equipment.

This ensures that resources in the second set will actually allow the reception of the backward packet by the first user equipment.

In a number of embodiments of the invention, the first user equipment sends the forward packet to a second user equipment in a D2D communication with the first user equipment; the backward packet is sent to the first user equipment, by the second user equipment.

This allows complying with time constraints of D2D communication.

In a number of embodiments of the invention, said second set of radio resources is obtained based on at least one data relative to an ability of the second user equipment to send said backward packet to said first user equipment.

By "data relative to an ability of the second user equipment to send said data packet to said user equipment", we designate any kind of data which provides an indication about the ability of the second user equipment to send a data packet using a radio resource.

This allows ensuring that the radio resources in the second set allow both the transmission of the backward packet by the second user equipment, and its reception by the first user equipment.

In a number of embodiments of the invention, the method comprises associating to the forward packet at least one data relative to the selection of a radio resource by the second user equipment.

By "at least one data relative to the selection of a radio resource by the second user equipment", we intend at least one data that provides to the second user equipment an insight about the radio resources to select, or selection constraints to comply with the time requirements of the communication.

This increases the chances of the second user equipment to select, among the possible radio a radio resources for sending the backward packet, a radio resource which can be received by the first user equipment during the time window and/or comply with operational constraints.

### Brief Description of Drawings

Other features, details and advantages will be shown in the following detailed description and on the figures, on which:
**Fig. 1**

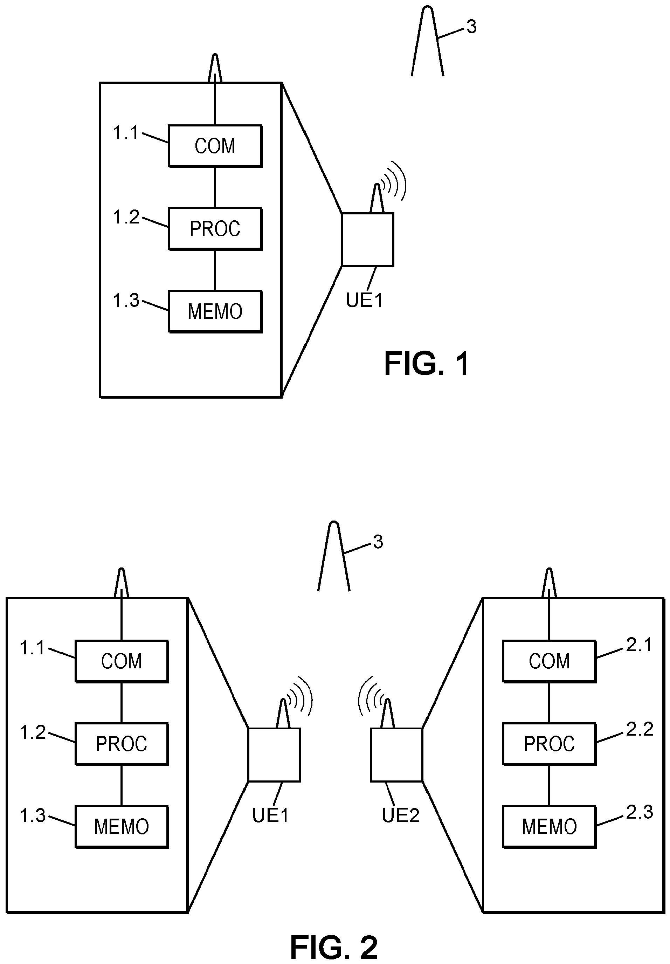

   [Fig. 1] represents an example of a first user equipment in a number of embodiments of the invention.
**Fig. 2**
   [Fig. 2] represents an example of two user equipments in a device-to-device communication in a number of embodiments of the invention.
**Fig. 3**

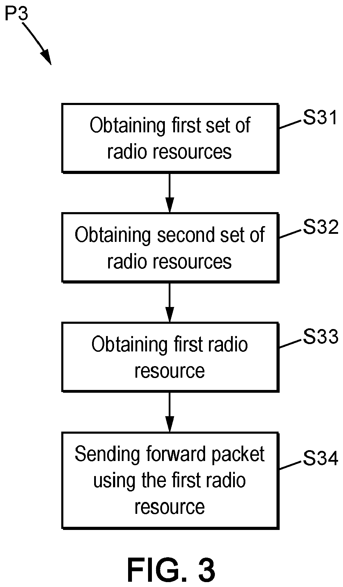

   [Fig. 3] represents a first example of a method in a number of embodiments of the invention.
**Fig. 4**

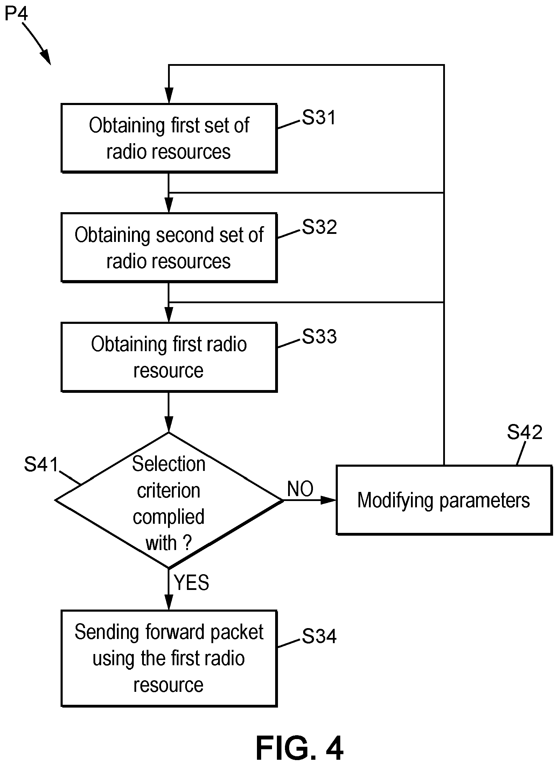

   [Fig. 4] represents a second example of a method in a number of embodiments of the invention comprising an iterative modification of parameters.
**Fig. 5**

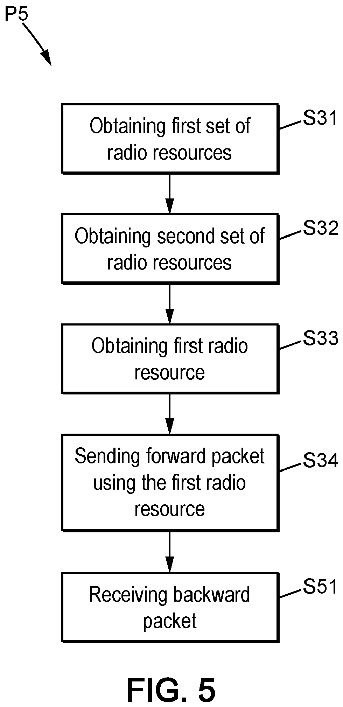

   [Fig. 5] represents a third example of a method in a number of embodiments of the invention.
Fig. 6

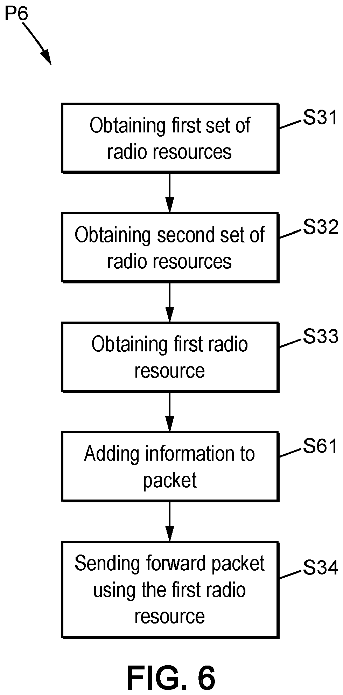

   [Fig. 6] represents a fourth example of a method in a number of embodiments of the invention comprising a step of adding information in a forward packet.
Fig. 7

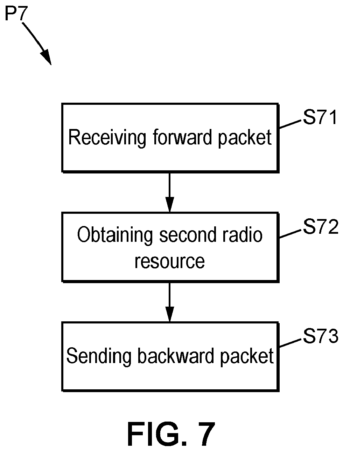

   [Fig. 7] represents a fifth example of a method in a number of embodiments of the invention executed by a second user equipment.
Fig. 8

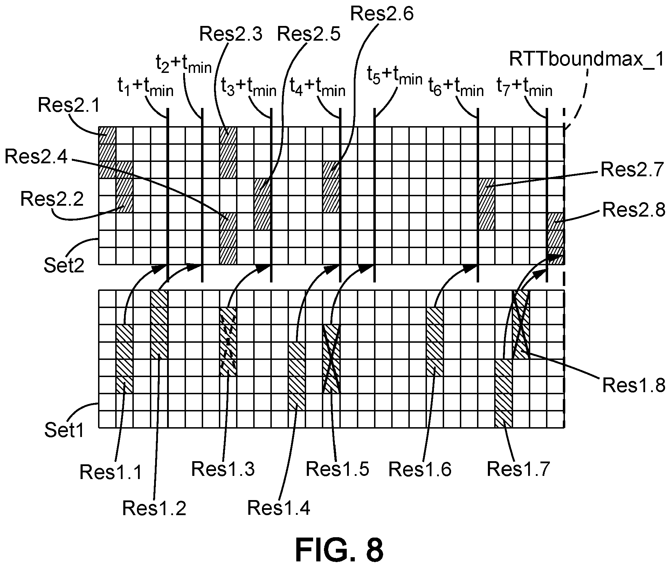

   [Fig. 8] represents a first example of selection of a first radio resources in a number of embodiments of the invention.
**Fig. 9**

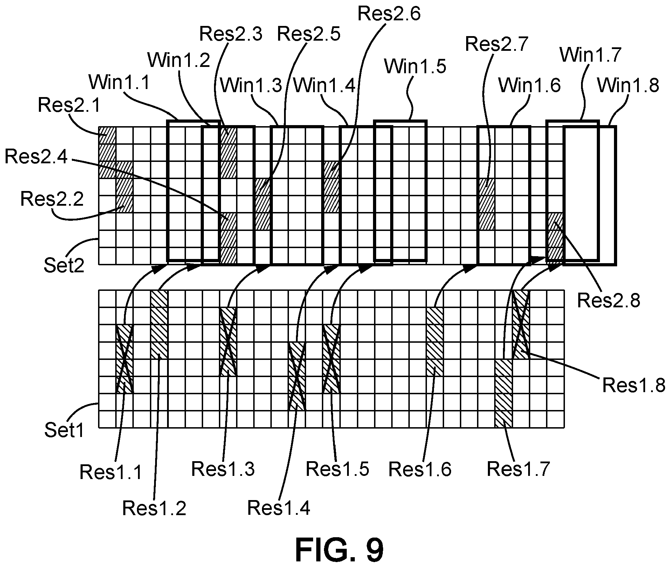

   [Fig. 9] represents a second example of selection of a first radio resources in a number of embodiments of the invention.

### Description of Embodiments

It is now referred to figure 1.

Figure 1 shows a first user equipment user UE1 emitting a radio signal. The requesting user equipment 1 may be in the coverage of a base station 3. The communication with radio signal may be for example an OFDM based transmission. The requesting user equipment 1 is a mobile device, that is involved in a communication, for example a communication with the base station 3, a Vehicle-to-everything (V2X) communication in the context of the standards LTE or NR. More generally, the requesting user equipment 1 may be any type of mobile user equipment, for example, vehicular communication system, a personal communication equipment (for example a user equipment), etc.

The communication is implemented in the context of a forward packet (FWP) which requests operation related to the forward packet. The operation related to the forward packet may be of different types. It may be for example the reception by the first user equipment UE1 of a backward packet related to the forward packet, the execution of measurements relative to the radio communication, for example performing measurements by the base station 3, or sending a second forward packet by the first device.

The first user equipment 1 comprises one communication module (COM) 1.1, one computing module (PROC) 1.2 and a memory unit (MEMO) 1.3. The MEMO 1.3 comprises a non-volatile unit which retrieves the computer program and a volatile unit which retrieves the parameters that may be implemented for operation related to the forward packet. For example, it may be configured to calculate a time delay between the sending of the forward packet and the execution of the operation, or calculate the time of execution of the operation.

The COM 1.1 is configured to emit the forward packet and eventually retransmit the packet.

The COM 1.1 may also, in some embodiments of the invention, be configured to receive information relative to the operation, for example receiving a backward packet relative to the forward packet.

In Figure 1, it is also shown a base station 3 (BS). UE1 may optionally be in communication with the BS 3, and thus may receive data from BS 3 via its communication module (COM 1.1).

In the example of figure 1 only one user equipment is represented. However, the invention is not limited to this configuration such configuration and also encompasses cases where more than one user equipment is present, notably if the first user equipment UE1 is in D2D communication with other user equipments or devices.

It is now referred to figure 2.

Figure 2 shows two user equipments in a D2D communication, a first (requesting) user equipment 1 (UE1) emitting a radio signal received by a second (responding) user equipment 2 (UE2). The first user equipment 1 and/or the second user equipment 2 may be in the coverage of a base station 3, or only one of the two devices may be in the coverage area of the base station, or both devices may be outside the coverage area of the base station. This D2D communication may be for example an OFDM based transmission. The requesting user equipment 1 and the responding user equipment 2 are mobile devices, that is, these user equipments are involved in a D2D communication, for example, a Vehicle-to-everything (V2X) communication in the context of the standards LTE or NR. More generally, the requesting user equipment 1 and/or the responding user equipment 2 may be any types of mobile user equipment, for example, vehicular communication system, a personal communication equipment (for example a user equipment), etc. The D2D communication is implemented in the context of a forward packet (FWP) which request specific data to UE2, the data requested is sent by UE2 to UE1 in a backward packet (BWP). This specific exchange between UE1 and UE2 is referred to as a round-trip transmission.

The requesting user equipment 1 is similar to the user equipment UE1 shown in figure 1, and thus comprises one communication module (COM) 1.1, one processing module (PROC) 1.2 and a memory unit (MEMO) 1.3. The MEMO 1.3 comprises a non-volatile unit which retrieves the computer program and a volatile unit which retrieves the parameters that may be implemented for the round-trip transmission, for example, the volatile unit may retrieve the PDB (PDB1), a target RTT, a measured RTT, an estimate of the propagation delay between UE1 and UE2, request packet content, TD_{E} (time duration (TD_{E}) between the generation and the transmission of the forward packet by the user equipment UE1), TD_{R} (remaining time duration, that is, a time duration corresponding to the target RTT to which the time duration (TD_{E}) is subtracted), a preferred set of radio resources, retransmission resources for a specific packet, etc.

The PROC 1.2 is configured to generate a forward packet (FWP) and to configure the COM 1.1 to transmit it to the responding user equipment 2. The PROC 1.2 is also configured to compute the TD_{E}, TD_{R} or to determine a preferred set of radio resources or to determine the retransmission resources for a specific packet. The PROC 1.2 is configured to decode the BWP and to obtain the information requested by FWP.

The COM 1.1 is configured to emit the FWP and eventually retransmit the packet.

The COM 1.1 is also configured to receive the BWP.

The responding user equipment 2 comprises one communication module (COM) 2.1, one computing module (PROC) 2.2 and a memory unit (MEMO) 2.3. The MEMO 2.3 comprises a non-volatile unit which retrieves the computer program and a volatile unit which retrieves the parameters that may be implemented for the round-trip transmission, for example, the volatile unit may retrieve the PDB (PDB2), a target RTT, the time duration, an estimate of the propagation delay between UE1 and UE2, request packet content (FWP content), response packet content, TD_{E}, TD_{R}, a preferred set of radio resources, retransmission resources for a specific packet, a new PDB2 (PDB2'), TBR, computing time of the another user equipment, etc.

The PROC 2.2 configures the COM 2.1 to receive and decode the FWP from the UE1. The PROC 2.2 is configured to generate a backward packet (BWP) in response to the FWP and to configure the COM 2.1 to transmit it to UE1. The PROC 2.2 is also configured to compute the time duration (for example TD_{E}, TD_{R}) and/or PDB2'. The PROC 2.2 is also configured to select radio resources among the radio resources of the preferred set of radio resources or based on the retransmission radio resources indicated for FWP. The PROC 2.2 is configured to decode the BWP and to obtain the information requested by FWP.

The COM 2.1 is configured to emit the BWP and eventually retransmit the packet.

The COM 1.1 is also configured to receive the BWP.

In Figure 1, it is also shown a base station 3 (BS). UE1 and/or UE2 may be in communication with the BS 3, and thus may receive data from BS 3 via their communication module (COM 1.1 and COM 2.1). For example, UE1 and/or UE2 may receive the target RTT if it is not already configured on UE1 and/or UE2.

In the example of figure 1 only two user equipment are represented. However, the invention is not limited to such one-to-one D2D communication and also encompasses cases where more than one user equipment are intended to receive the FWP and to respond to it.

It is now referred to figure 3.

The figure 3 represents a first example of a method P3 according to a number of embodiments of the invention.

All or a part of the steps of the method P3 can be performed by a user equipment, for example the first user equipment UE1 represented in figures 1 and 2.

The method P3 comprises a first step S31 of obtaining a first set of radio resources available to send a forward packet from a first user equipment.

This allows obtaining a first set of radio resources that can be used for sending the forward packet.

As explained above, this can be for example performed by the first user equipment screening its environment, and/or by the procedure defined in the standard TS38.214/8.1.4.

The method P3 further comprises a second step S32 of obtaining a second set of radio resources available to perform an operation related to the forward packet.

As explained above, the operation related to the forward packet is an operation which is caused by, and expected as a result of the transmission of the forward packet. The operation may for example be dependent upon the application that causes the transmission of the backward packet, and may be for example:
- the reception by the first user device of a backward packet in response to the transmission of the forward packet;
- the transmission by the first user device of a further forward packet related to the forward packet, for example another packet sent by the same application ;
- the performance of measurements further to the transmission of the forward packet, for example a future packet to be sent for the same application than the forward packet;
- etc.

The execution of the operation related to the forward packet requires using at least one radio resource. For example, radio resources are necessary to send and receive further packets, to perform radio measurements, etc.

The step S32 thus allows obtaining a second set of radio resources that are available to perform the operation. Of course, the determination of the radio resources that are available to perform the operation depend upon the operation itself. For example:
- if the operation is a reception by the first user device of a forward packet in response to the transmission of the forward packet, the determination of the availability of the radio resources may be performed according to the availability of the first user device to receive a packet, and/or the availability of a second user device to send a packet to the first user device ;
- if the operation is a transmission by the first user device of a further forward packet, the determination of the availability to perform the operation may comprise a determination of the availability of a radio resource for sending the further forward packet by the first user device ;
- if the operation is the performance of a radio measurement by the first user equipment, the determination of the availability to perform the operation may comprise a determination of the availability of a radio resource to perform a measurement ;
- if the operation is the performance of a radio measurement by the second user equipment, the determination of the availability to perform the operation may comprise a determination of the availability of a radio resource to perform a measurement by the second device;
- etc.

The second set of radio resources may be at least partially, possibly fully different from the first set of radio resources. There may be at least a radio resource in the first set of radio resources that is not included in the second set of radio resources. For example, for each radio resource in the first set of radio resources, there may be an associated time window comprising at least one, and possibly a group of associated radio resources in the second set of radio resources. The associated radio resources in the second set may be posterior to the radio resource in the first set. In this case, a minimum and/or a maximum time gap may be required between the resource in the first set and the associated resources in the second set. In other words, at least a resource in the first resource set may be anterior to any other resource in the second set, or to the earliest resource in the second resource set. In another interpretation, at least a resource in the second resource set may be posterior to any other resource in the first resource set, or posterior to the latest resource in the first resource set. The first and the second resource sets may be completely disjoint. For example, the first resource set may comprise only resources available for transmission, and the second resource set may comprise resources available for reception, or vice-versa. For half duplex terminals, the two sets do not have any common resources. In yet another example, the one resource set (for example, the first resource set) contains resources available for communication (for example, transmission and/or reception), and the other set (for example, the second resource set) contains resources available for measurements. The availability can be seen from the perspective of the user equipment transmitting the forward packet, or from the perspective of another user equipments (for example, the user equipment performing the measurement, or the user equipment expected to send the backward packet).

The method P3 further comprises a third step S33 of obtaining, among said first set of radio resources, at least one first radio resource associated to a first time ti so that at least one second radio resource from the second set is comprised in a time window having a lower bound after said first time and, optionally, an upper bound defined according to at least one of said forward packet and said first time.

Stated otherwise, the first radio resource having a first time ti can be selected in order that at least one second radio resource from the second set is comprised in a defined time window after the first time ti, wherein the time window is defined according to the forward packet and/or the first time, for example to comply with time constraints caused by the transmission of the first packet.

Therefore, this allows ensuring that a second radio resource can be selected afterwards, which in the same time:
- belongs to the second set, so is available for performing the operation;
- and has a time in the time window, so a time which complies with time constraints caused by the transmission of the first packet.

According to various embodiments of the invention, the third step S33 may comprise obtaining:
- a single first radio resource, associated to a single time window ; of
- a plurality of first radio resrouces associated to a plurality of time windows respectively, which means that each first radio resource of said plurality is associated with a corresponding time window.

A plurality of first radio resources obtained in the same time may for example correspond to a plurality of forward messages to be sent by the same application respectively, or to successive re-transmissions of a same forward packet.

Therefore, during the execution of the step S33, one can obtain a list of candidate first radio resources that belong to the first set that comply with the condition of having associated therewith a time window comprising a at least one second radio resource from the second set.

The time window may for example defined by:
- a minimum time tᵢ + tₘᵢₙ, wherein tₘᵢₙ is a minimum time threshold ; and/or
- a maximum time tᵢ + tₘₐₓ, wherein tₘₐₓ is a maximum time threshold.

The window may therefore be defined as [tᵢ + tₘᵢₙ; tᵢ + tₘₐₓ]

The minimum time threshold tₘᵢₙ may be defined according to different rules. For example, it may be defined in order to let enough time to a device the forward packet is to be transmitted to receive and method the forward packet, before needing to use a second radio resource, for example to send a backward packet.

The maximum time threshold tmax may be defined according to different rules. For example, it may be defined in order to ensure that the second radio resource will be used in a time frame that complies with time requirements, for example communication time requirements.

For example, if the second radio resource is to be used to send a backward packet the maximum time threshold tmax may be defined in order to ensure that a maximum time tmax occurs between the transmission of the forward packet, and the transmission of the backward packet, and therefore that one or more target communication metric are complied with. For example, the maximum time tmax can be defined according to one or more of:
- a target Round Trip Time (RTT) of the communication ;
- a Packet Delay Budget (PDB) of the forward and/or backward packet;
- etc...

The minimum time threshold tₘᵢₙ, and maximum time threshold tmax may be fixed or variable over time. They may thus be time variant (tₘᵢₙ(tᵢ), tₘₐₓ(tᵢ)), or for example change for each instant tᵢ. We will skip the time indices in the following description for the sake of the readability. For example, their value may be defined according to the needs of the application that request the transmission of the forward packet and/or modified iteratively in the course of the application. For example, their value may be modified iteratively depending on criteria such as the time from the first attempt of sending an initial forward packet, the number of retransmissions for the forward packet, a previous number of retransmissions of a previous packet, information on the channel quality, information related to characteristics of the first and/or of the second terminal (e.g., processing times, capability, etc.), etc.

In a number of embodiments of the invention, the first set of radio resources, and the second set of radio resources are selected in a global time window having an upper bound RTTboundmax_1. The upper bound RTTboundmax_1 can be defined for example according to a maximum time to perform an operation. For example, if the second set of radio resource is used to send a backward packet, the upper bound RTTboundmax_1 of the global time window may be set in order to ensure that the last possible time of reception of the backward packet by the first user equipment complies with the latest expected reception time.

The upper bound of the global time window may be for example:
- fixed;
- provided by an application which causes the communication;
- provided by an upper layer;
- and/or coordinated by a central server in order to obtain the best tradeoff between RTT and resource occupancy;
- defined according to a TCP transport layer used by the application that causes the communication, and whose rate depends on the RTT;
- defined in order to ensure the stability of an automatic control related to an application causing the communication, the stability of the automatic control being computed from the RTT;
- etc.

If a global time window having an upper bound is used, the time window can be bound by the upper bound of the global time window. For example, if the time ti of a candidate first radio resource is such that tᵢ + tₘₐₓ > RTTboundmax_1, RTTboundmax_1 being the maximum of a global time window, the time window associated with the resource will be [tᵢ + tₘᵢₙ; RTTboundmax_1] instead of [tᵢ + tₘᵢₙ; tᵢ + tₘₐₓ]. If tᵢ + tₘᵢₙ > RTTboundmax_1, RTTboundmax_1, then the first candidate radio resource simply cannot be selected, because no second radio resource could be selected in the global time window after this candidate first radio resource.

This method can lead to the generation of a plurality of candidates first radio resources, each associated with a time window. For example, if the time window associated with each candidate first radio resource is defined by a lower bound at a time tₘᵢₙ after the time of the candidate radio resource, and an upper bound at a time tmax after time of the candidate radio resource:
- a first candidate radio resource at a time ti is associated with a time window [tᵢ + tₘᵢₙ; tᵢ + tmax] in which n₁ radio resources from the second set are found;
- a second candidate radio resource at a time t₂ is associated with a time window [t₂ + tₘᵢₙ; t₂ + tₘₐₓ] in which n₂ radio resources from the second set are found;
- a third candidate radio resource at a time t₃ is associated with a time window [t₃ + tₘᵢₙ; t₃ + tmax] in which n₃ radio resources from the second set are found;
- etc.

The at least one first radio resource can then be obtained, for example selected, among the candidate first radio resources.

In general, obtaining a first radio resource associated with a time window that comprises a number of radio resources from the second set at least equal to a threshold increases the odds, or ensures that a radio resource will be actually available for performing the operation.

Indeed, it is in some specific cases possible that the first user equipments detect a second radio resource from the second set as available for performing the operation, but that the second radio resource turns out not to be available for performing the operation at the time of the second radio resource. It is for example the case if:
- the second radio resource is requested by a higher priority application in the meantime, and therefore not available at the time the operation needs to be performed;
- the operation consists in sending, by a second user device, a packet to the first user device, and the second radio resource is detected as available for reception by the first user device but turns out not to be available for transmission by the second user device;
- the position of the devices have changed, and thus the availability of radio resources changed;
- etc.

Therefore, having more resources form the second set in the time window associated with the first resource increases the odds of having an available radio resource from the second set at the time the operation needs to be performed.

A selection of the first radio resource among the candidate first radio resources can therefore be performed in different ways. For example:
- the candidate associated with the time window that comprises the most radio resources from the second set can be selected;
- a candidate associated with a time window that comprise the most homogeneous distribution of radio resources from the second set over the time window can be selected;
- a candidate can be selected, for example randomly, among candidates that comply with a requirement such as:
   ∘ a candidate associated with a time window that comprises a number of radio resources from the second set at least equal to a threshold Mi can be selected. In such case, the threshold Mi corresponds to a minimal number of radio resources to ensure that at least one second radio resource will finally be available;
   ∘ a candidate is associated with a time window in which the homogeneity of the time distribution of the radio resources belonging to the second set is satisfactory;
   ∘ etc.
- etc.

In cases wherein a candidate first radio resources must comply with the requirement that it is associated with a time window that comprises a number of radio resources from the second set at least equal to a threshold Mi, the threshold Mi may be equal to 1, or higher. It may also be fixed or variable, and may for example be dependent upon:
- a remaining RTT value or of an indication related to the QoS of a bi-directional application;
- a priority of a backward packet expected in response to the forward packet;
- the number of transmissions/retransmissions already performed by the forward packet;
- an indicator related to the channel load (CBR, CR etc...);
- etc.

More generally, the threshold Mi can be defined according to any information relative to a chance of success of the operation, in particular an information relative to the possibility of successfully sending and receiving a packet.

The method P3 further comprises a fourth step S34 of sending, by the first user equipment, said forward packet using said first radio resource.

We are now referring to figure 4.

The method P4 comprises all the steps of the method P3 represented in figure 3.

In addition, it comprises, before the step S34 of sending the forward packet, a step S41 of verification that at least one selection criterion is complied with.

The at least one selection criterion may comprise one or more criteria relative to the validity of the selection of the first radio resource.

For example, the at least one selection criterion may comprise at least one criterion relative to :
- the possibility of selecting at least one first radio resource at step S33 ;
- a comparison of the number of second radio resources in a time window associated with a first radio resource at step S33 and a threshold (the number of radio resource of the second set in the time window must be higher than the threshold for the criterion to be verified) ;
- etc.

If the at least one selection criterion is complied with, the step S34 of sending the forward packet using the first radio resource selected at step S33 can be executed.

Otherwise, i.e if at least one selection criterion is not complied with, the method P4 comprises a step S42 of modifying one or more parameters of one or more of the steps S31, S32 and S33, before going back to the first step for which at least one parameter has been modified.

The parameters that can be modified may be for example:
- for steps S31 and S32:
   ∘ a priority for adding and/or removing a radio resource in the first set at step S31, respectively the second set at step S32 ;
   ∘ a RSRP threshold for adding and/or removing a radio resource in the first set at step S31, respectively the second set at step S32 ;
   ∘ etc.
- for step S33:
   ∘ a minimal number of second resources Mi in a time window associated with a first resource necessary to select the first resource;
   ∘ a maximal time threshold tmax for defining the upper bound of a time window associated with a first resource;
   ∘ etc.

In general, the method P4 may start with strict parameters (i.e parameters that lead to obtain less resources in step S31 and S32, and select less resources in step S33), and, until at least one selection criterion is complied with, modifying the parameters to looser values obtain / select more radio resources.

For example, let's imagine a case wherein the step S33 requires a minimal number of resources Mi in a time window to select a first resource, and Mi is initially be set to 4. If it is not possible to select a first radio resource using this parameter, the value of Mi can be set to 2 before executing again step S33, and, if this still does not allow the selection of a first resource, Mi can be set to 1.

Therefore, the first resource is selected, if possible, with a high number Mi (which means that a high number of second resources are present in the time window), and by default with a lower number Mi. The same reasoning is of course possible with other parameters of the method More than one parameter can be modified in the same time, and, after the modification, the method can go back to steps S31 or S32 if parameters of these steps have been modified.

For steps S31 and S32, looser parameters would be parameters which lead to selecting/obtaining more radio resources. For example, if the step S32 comprises selecting the radio resource which have a RSRP higher than a RSRP threshold as available for receiving a backward packet, then setting the RSRP threshold to a lower value would lead to adding more resources in the second set of resources, and therefore increase the odds that the at least one selection criterion is complied with at step S41.

Therefore, then method P4 generally allows to select a radio resource with the strictest parameters and broaden the selection rules in order to select a radio resource anyway if this is not possible with the strictest parameters.

However, the values of parameters may be bounded. For example, the lowest possible value of the parameter Mi relative the minimal number of second radio resources must be at least equal to 1, and may be higher depending upon the application. If at least one selection criterion is still not complied when all the parameters have their loosest values, the method P4 may raise an error stating that a selection of a first resource is not possible at this stage.

It is now referred to figure 5.

The figure 5 represents a third example of method in a number of embodiments of the invention.

In the example of figure 5, the method P5 comprises all the steps of the method P3 and comprises, in addition, a further step S51 of sending, to the first equipment, a backward packet related to said forward packet.

The backward packet may for example be sent by the second user equipment UE2, by another user equipment, or by a base station.

The backward packet can then be received by the first user equipment UE1.

For example, the backward packet may contain a response to the content of the forward packet in the context of a given application.

In this case, the obtention of the second set of radio resources at step S32 may aim at ensuring that a radio resource will be available for transmitting and receiving the backward packet.

For example, the radio resources in the second set may be selected so that the second set of radio resources comprises radio resources available to receive a backward packet by the first user equipment.

This determination of such radio resources available to receive a backward packet by the first user equipment may be for example performed by determining, for each radio resource, if it is suitable for receiving a packet by the first user equipment, or conversely by excluding resources which are determined as not suitable for receiving the packet. For example:
- resources that are interfered may be excluded;
- resources declared as unavailable may be excluded;
- resources with a perceived RSRP higher than a threshold may be excluded;
- resources that are interfered by a message with a priority higher than a threshold may be excluded;
- etc...

Therefore, in this example, the first radio resource is ultimately selected, so that enough radio resources will be available for receiving the backward packet in a time window after the first resource.

The method P5 can in particular be used in an example of a D2D communication between the first user equipment and a second user equipment such as the user equipment UE2 represented in figure 2, wherein the first user equipment sends the forward packet to the second user equipment UE2 in a D2D communication with the first user equipment, and wherein the backward packet is sent to the first user equipment, by the second user equipment.

In this case, the steps of the method P5, and in particular the selection of a first radio resource so that enough radio resources of the second set are present in a time window after the first radio resource, allow complying with time constraints in the D2D communication, because enough radio resources of the second set will be available to receive a backward packet in a time window which complies with the time constraints of the D2D communication.

In a number of embodiments of the invention, the radio resources in the second set may be obtained based on at least one data relative to an ability of the second user equipment to send said backward packet to said first user equipment.

As noted above, the at least one data relative to an ability of the second user equipment to send said backward packet to said first user equipment may be any kind of data which provides an indication about the ability of the second user equipment to send a data packet using a radio resource.

Examples of such selection of radio resources may comprise the selection of one or more of:
- radio resources available to send a packet by the second device. Such radio resources may be obtained by a screening from the second device;
- radio resources for which an estimated Radio Resource Management (RRM) value, timer or indicator is higher than or smaller than a predefined threshold ;
- radio resources which are not interfered;
- radio resources which are interfered with a priority lower than the priority of the backward packet. By "lower priority", we mean a radio resource is interfered with a priority less important than the backward packet, which means that the resource request of the radio resource can be override by the backward packet. It shall however be noted that the index of the priority orders may be inversed. For example, in the 3GPP specification, the highest priority is associated to the index 0, while the lowest priority is associated to the index 7 ;
- etc.

Such a selection may therefore take into account data received from the second user device. According to various embodiments of the invention, the selection of radio resources at step S32 may take into account the ability of the first user equipment to receive the backward packet, the ability of the second user equipment to send the backward packet, or a combination thereof.

It is now referred to figure 6.

The figure 6 represents an example of method P6 in a number of embodiments of the invention.

The method P6 comprises all the steps of the method P3.

It further comprises, prior to the step S34 of sending the forward packet, a step S61 of associating to the forward packet at least one data relative to indications for performing the operation related to the forward packet.

The association of the at least one data to the forward packet may comprise for example inserting the data within the forward packet itself, or sending the at least one data along the forward packet, or signaling the at least one data in an implicit manner. The at least one data could be sent at the same time or not as the forward packet, but needs to be send and received by a same recipient than the forward packet. The at least one data may be transferred using the same channel, or a different channel, than the forward packet. It may also be sent before, after, or at the same time than the forward packet. Signaling the at least one data in an implicit manner may be done for example by using a specific format for sending the data packet, by the presence/absence of a specific field, by an associated timer, or by any other means allowing the recipient of the forward packet to deduce said at least one data.

The execution of the step S61 prior to the step S34 therefore allows a recipient of the forward packet to benefit from data relevant for performing the operation related to the forward packet.

The at least one data may for example comprise one or more of:
- data relative to constraints or objectives of the operation. Such a data may for example comprise a minimum time to send a backward message, or perform an operation;
- data relative to the selection of the radio resources to send a backward message by a reception of the forward message. Such data may comprise any kind of data allowing the recipient of the forward message to select the most relevant radio resources to send back a backward message to the first user equipment;
- an indication that the forward packet is expected to trigger a specific measurement, possibly within a given timeframe;
- an indication that the forward packet requires an answer (i.e, the backwards packet);
- an indication triggering resource selection at the receiver side;
- etc.

For example, in a number of embodiments of the invention wherein the first user equipment is in a D2D communication with a second user equipment, the step S61 may comprise associating to the forward packet at least one data relative to the selection of a radio resource by the second user equipment.

The at least one data relative to the selection of a radio resource by the second user equipment may for example comprise one or more of:
- an indicator relative to IND ;
- a descriptor or an indicator relative to the at least one radio resource. For example, such an indicator or descriptor may be a descriptor of the radio resources of the time window associated with the first radio resources that are detected as available in reception by the first user equipment ;
- an indicator about the remaining RTT budget ;
- an indicator about the consumed time budget since first transmission attempt;
- Etc.

Therefore, this allows the second user equipment to select more accurately a second radio resource to send a backward message to the first user equipment.

For example:
- if the at least one data relative to the selection of a radio resource by the second user equipment comprises an indicator about the remaining RTT budget, the second user equipment may use this information to select a second radio resources that complies with the remaining RTT budget to send the backward packet;
- If the at least one data comprises a descriptor of the radio resources of the time window associated with the first radio resources that are detected as available in reception by the first user equipment, the second user equipment may select for the transmission of the backward packet one of the radio resources defined by the descriptor, in order to maximize the chances that the first user device will be able to receive the backward packet.

It is now referred to the figure 7.

The figure 7 represents an example of a method P7 in a number of embodiments of the invention.

All or a part of the steps of the method P7 may be executed by a second user device in a D2D communication with the first user device, such as the second user device UE2 represented in figure 2.

The method P7 comprises a first step S71 of receiving a forward packet from a first user equipment UE1, by a second user second user equipment UE2 in a D2D communication using a first radio resource having a first time.

The forward packet may for example be a forward packet sent during the steps S34 of one of the methods P3, P4, P5 and P6.

The method P7 further comprises a second step S72 of selecting a second radio resource available to send a backward packet related to said forward packet by the second user equipment comprised in a time window having a lower bound after said first time and an upper bound defined according to at least one of said forward packet and said first time.

The step S72 may typically comprise selecting, by the second user equipment, a radio resource belonging to both the second set of radio resources obtained at the step S32 of one of the methods P3, P4, P5 and P6, and the time window associated with the first radio resource.

In embodiments wherein the forward packet has been associated, at step S61, to at least one data relative to the selection of a radio resource by the second user equipment, this data may be used by the second user equipment at step S72 to select the second radio resource.

The method P7 further comprises a third S73 of sending, by the second user equipment, said backward packet to the first user equipment using second radio resource.

Therefore, the method P7 allows enhancing a D2D communication with the first user equipment. In particular, the selection of the second radio resource in relation to the first radio resource, and optionally at least one data relative to the selection of a radio resource by the second user equipment, allows a selection of the second radio resource, and a transmission of the backward packet that comply with operational requirements of the application that caused the transmission of the forward packet.

It is now referred to figures 8 and 9.

Figures 8 and 9 represent respectively a first and a second example of selection of a first radio resource in a number of embodiments of the invention.

In both figures 8 and 9, the radio resources are represented using 2D representations, wherein :
- the horizontal axis represents time. In this example, for the sake of clarity and intelligibility of the example, the times are defined using an elementary time units. Each column in the 2D representations represents one time unit. A time unit may be represented by a symbol duration (e.g. an OFDM symbol in a system based on OFDM-based transmission, etc), or by the duration of a group of symbols (e.g. a mini-slot, a slot, a part of a slot dedicated to a given physical channel, a subframe, a frame, etc), or more generally the duration of an allocation unit. An allocation unit is generally defined as the smallest time/frequency resource that can be signaled as part of the resource allocation procedure ;
- the vertical axis represents the frequency domain. Each row in the 2D representations represents one frequency unit. For a system based on multicarrier transmission (e.g. OFDM-based) a frequency unit may be a subcarrier, a set of subcarriers such as a resource block or a resource block group, a subchannel, or more generally the frequency span of an allocation unit. In this example, the first column will have a time equal to 1, then the time is incremented by 1 time unit at each column;

A radio resource is therefore defined by both a time unit and a frequency unit.

In both cases, a first set Set1 of radio resource is obtained at step S31. In this example, the first set Set1 comprises in both cases:
- a radio resource Res1.1, at a time t_{1.1} = 2;
- a radio resource Res1.2, at a time t_{1.2} = 4;
- a radio resource Res1.3, at a time t_{1.3} = 8;
- a radio resource Res1.4, at a time t_{1.4} = 12;
- a radio resource Res1.5, at a time t_{1.5} = 14;
- a radio resource Res1.6, at a time t_{1.6} = 20;
- a radio resource Res1.7, at a time t_{1.7} = 24;
- a radio resource Res1.8, at a time t_{1.8} = 25.

In both cases, a second set Set2 of radio resource is obtained at step S32. In this example, the first set Set2 comprises in both cases:
- a radio resource Res2.1, at a time t_{2.1} = 1 ;
- a radio resource Res2.2, at a time t_{2.2} = 2 ;
- a radio resource Res2.3, at a time t_{2.3} = 8 ;
- a radio resource Res2.4, at a time t_{2.4} = 8 ;
- a radio resource Res2.5, at a time t_{2.5} = 10 ;
- a radio resource Res2.6, at a time t_{2.6} = 14 ;
- a radio resource Res2.7, at a time t_{2.7} = 23 ;
- a radio resource Res2.8, at a time t_{2.8} = 27.

The two examples however differ because they implement a different step S33 of selection of the first radio resource.

In the example of figure 8, the step S33 comprises associating to each candidate first radio resource of the first set a time window having:
- a lower bound equal to a minimum time threshold tₘᵢₙ after the time of the candidate first radio resource. In this example tₘᵢₙ is equal to 3 time units. It shall be noted that tₘᵢₙ has here a constant value in order to have simple example provided by means of non illustrative purpose only. More generally the value tₘᵢₙ may be variable over time and therefore different for each radio resource of the first set ;
- an upper bound equal to a global maximum of a global time window RTTboundmax_1. The global time window RTTboundmax_1 may counted for example from a selection trigger (start of time window from Res2.1 for example, that is the very first resource depicted in the figure), or from a previous predetermined time.

For example:
- the time window associated to the resource Res1.1 is the time window [t_{1.1} + tₘᵢₙ; RTTboundmax_1] ;
- the time window associated to the resource Res1.2 is the time window [t_{1.2} + tₘᵢₙ; RTTboundmax_1] ;
- the time window associated to the resource Res1.3 is the time window [t_{1.3} + tₘᵢₙ; RTTboundmax_1] ;
- the time window associated to the resource Res1.4 is the time window [t_{1.4} + tₘᵢₙ; RTTboundmax_1] ;
- the time window associated to the resource Res1.5 is the time window [t_{1.5} + tₘᵢₙ; RTTboundmax_1] ;
- the time window associated to the resource Res1.6 is the time window [t_{1.6} + tₘᵢₙ; RTTboundmax_1] ;
- the time window associated to the resource Res1.7 is the time window [t_{1.7} + tₘᵢₙ; RTTboundmax_1] ;
- the time window associated to the resource Res1.8 is the time window [t_{1.8} + tₘᵢₙ; RTTboundmax_1].

Then the resource Res1.8 can be excluded from the first set of selectable radio resource, because t_{8.1} + tₘᵢₙ = RTTboundmax_1, which means that selecting Res1.8 for sending the forward packet would not allow for a posterior selection of a resource from the second set.

In addition, other resources may be removed from the first set. For example, the resources which have the same time than a resource of the second set may be removed from the first set. Indeed, if the first user equipment UE1 is half duplex, it cannot in the same time send and receive signals, so it is not desirable to have radio resrouces from the first and second set at the same time. Thus, the following resrouces may be excluded from the first set:
- Res1.3, because t_{1.3} = t_{2.3=} t_{2.4} = 8
- Res1.5, because t_{1.5} = t_{2.6}= 14.

In the example of figure 9, each radio resource of the first set, having a time ti, is associated to a time window which has a lower bound at a time tᵢ + tₘᵢₙ, with tₘᵢₙ = 3 time units and an upper bound at a time tᵢ + tₘₐₓ, with tₘₐₓ = 6 time units It shall be noted that tₘᵢₙ are tₘₐₓ have here constant values in order to have a simple example provided by means of non illustrative purpose only. More generally the values tₘᵢₙ and tₘₐₓ may be variable over time and therefore different for each radio resource of the first set.

Therefore, in this example:
- the resource Res1.1 is associated with a time window Win1.1 [t_{1.1} + tₘᵢₙ; t_{1.1} + tₘₐₓ], which contains no resource from the second set ;
- the resource Res1.2 is associated with a time window Win1.2 [t_{1.2} + tₘᵢₙ; t_{1.2} + tₘₐₓ], which contains two resources from the second set (Res2.3, Res2.4) ;
- the resource Res1.3 is associated with a time window Win1.3 [t_{1.3} + tₘᵢₙ; t_{1.3} + tₘₐₓ], which contains no resource from the second set ;
- the resource Res1.4 is associated with a time window Win1.4 [t_{1.4} + tₘᵢₙ; t_{1.4} + tₘₐₓ], which contains no resource from the second set ;
- the resource Res1.5 is associated with a time window Win1.5 [t_{1.5} + tₘᵢₙ; t_{1.5} + tₘₐₓ], which contains no resource from the second set ;
- the resource Res1.6 is associated with a time window Win1.6 [t_{1.6} + tₘᵢₙ; t_{1.6} + tₘₐₓ], which contains one resource from the second set (Res2.7) ;
- the resource Res1.7 is associated with a time window Win1.7 [t_{1.7} + tₘᵢₙ; t_{1.7} + tₘₐₓ], which contains one resource from the second set (Res2.8). In a number of embodiments of the invention, this window may be bounded by RTTboundmax_1 ;
- the resource Res1.8 is associated with a time window Win1.8 [t_{1.8} + tₘᵢₙ; t_{1.8} + tₘₐₓ], which contains no resource from the second set. In a number of embodiments of the invention, this window may not even exist, because t₈ + tmax > RTTboundmax_1

Therefore, the candidate first radio resources Res1.1, Res1.3, Res1.4, Res1.5 and Res1.8 shall be excluded from the list of possible candidates, because the time windows associated to these resources do not contain any resource from the second set, which means that no radio resource from the second set would be available to perform an operation related to the transmission of the first radio resource in the desired time frame, if one of these resources were to be selected.

In the example of figure 9, the step S33 therefore selects one of the radio resources Res1.2, Res1.6 and Res1.7 as the first radio resource to send the forward packet. The first radio resource may be selected among the three candidate first radio resource Res1.2, Res1.6 and Res1.7 based on different criteria. For example:
- the first radio resource may be select randomly among the three resources Res1.2, Res1.6 and Res1.7 ;
- the radio resource associated with the time window that comprises the most radio resources from the second set can be selected. In this example, the resource Res1.2 would be selected, because the associated time window Win1.2 comprises 2 radio resources from the second set, while the time windows Win1.6 and Win1.7 associated respectively to the resources Res1.6 and Res1.7 contain only one radio resource from the second set ;
- a threshold Mi = 2 of radio resources from the second set in a time window associated with a candidate first radio resource for the candidate first radio resource to be selected. In this case the resource Res1.2 would be selected, because it is the only one which fulfills this condition ;
- the candidate first radio resource having the earliest time can be selected. In this example, the resource Res1.2 would be selected, because t₂ < t₆, and t₂ < t₆.

The examples of figure 8 and 9 are provided by means of non-limitative example only of rules of selection of a first resource in a number of embodiments of the invention, and other rules of selections may be implemented within the scope of this disclosure.

This disclosure is not limited to the method, computer software, computer-readable non-transient medium, packet user equipment described here, which are only examples. The invention encompasses every alternative that a person skilled in the art would envisage when reading this text.

For example, all non-mutually exclusive embodiments presented herein can be combined. For example, several embodiments of the methods presented in figures 4, 5 and 6 can be combined.

## Claims

1. A method (P3, P4, P5), comprising:
- obtaining (S31) a first set (Set1) of radio resources available to send a forward packet from a first user equipment (UE1) ;
- obtaining (S32) a second set (Set2) of radio resources available to perform an operation related to the forward packet;
- obtaining (S33), among said first set of radio resources, at least one first radio resource associated to at least one first time (Ti) so that at least one second radio resource from the second set is comprised in a time window having a lower bound after said at least one first time;
- sending (S34), by the first user equipment, said forward packet using said at least one first radio resource.

2. The method of claim 1, wherein said first radio resource is selected so that the number of second radio resources from the second set in the time window is at least equal to a threshold of number radio resources.

3. The method of any of the preceding claims, wherein the first set of radio resources, and the second set of radio resources are obtained in a global time window having a global upper bound (RTTboundmax_1).

4. The method of any of the preceding claims, wherein said time window has an upper bound defined according to at least one of said forward packet and said first time.

5. The method (P4) of any of the preceding claims comprising, while at least one selection criterion is not complied with (S41), iteratively modifying (S42) one or more parameters of one or more of the steps of:
- obtaining a first set of radio resources ;
- obtaining the second set of radio resources ;
- and selecting the first radio resource.

6. The method (P6) of any of the preceding claims, comprising associating (S61) to the forward packet at least one data relative to indications for performing the operation related to the forward packet.

7. The method (P5) of any of the preceding claims, wherein the operation comprises sending (S51), to the first equipment, a backward packet related to said forward packet.

8. The method of claim 7, wherein said second set of radio resources comprises radio resources available to receive a backward packet by the first user equipment.

9. The method of claim 8, wherein:
- the first user equipment sends the forward packet to a second user equipment (UE2) in a D2D communication with the first user equipment;
- the backward packet is sent to the first user equipment, by the second user equipment.

10. The method of claim 9, wherein said second set of radio resources is obtained based on at least one data relative to an ability of the second user equipment to send said backward packet to said first user equipment.

11. The method of any one of claims 10 or 11, comprising associating to the forward packet at least one data relative to the selection of a radio resource by the second user equipment.

12. A method (P7), comprising:
- receiving (S71) a forward packet from a first user equipment (UE1), by a second user second user equipment (UE2) in a D2D communication using a first radio resource having a first time (tᵢ) ;
- selecting (S72) a second radio resource available to send a backward packet related to said forward packet by the second user equipment comprised in a time window having a lower bound after said first time and an upper bound defined according to at least one of said forward packet and said first time;
- sending (S73), by the second user equipment, said backward packet to the first user equipment using second radio resource.

13. A forward packet sent by a first user equipment (UE1) using a first radio resource having a first time (ti), said first radio resource being selected among a first set of radio resources available to send said forward packet from the first user equipment so that at least one second resource from a second set of radio resources available to perform an operation related to the forward packet is comprised in a time window having a lower bound after said first time.

14. A user equipment (UE) comprising at least one processor configured to execute the method according to one of claims 1 to 13.

15. A computer software comprising instructions to implement at least a part of a method according to one of claims 1 to 13 when the software is executed by a processor.
